# EUROPÄISCHE PATENTANMELDUNG

(11) **EP 4 755 691 A1**
(43) Veröffentlichungstag der Anmeldung: **10.06.2026**
(21) Anmeldenummer: 25220744.4
(22) Anmeldetag: 04.12.2025
(51) Int. Cl.: B60L 1/00, B60L 1/02, B60L 7/18, B60L 15/20, B60L 58/13, B60L 58/15, E02F 9/20, E02F 9/22

(54) **ARBEITSMASCHINE**

(30) Priorität: 06.12.2024 DE 102024136504
(71) Anmelder: Liebherr-Werk Bischofshofen GmbH, 5500 Bischofshofen (AT)
(72) Erfinder: GAPPMAIER, Rupert, 5541 Altenmarkt (AT); HOFBAUER, Johannes, 5301 Eugendorf (AT); PICHLER, Wolfgang, 5400 Golling (AT); ALTENBERGER, Florian, 5662 Taxenbach (AT); WALLNER, Daniel, 5550 Radstadt (AT)
(74) Vertreter: Lorenz Seidler Gossel Part. mbB

(57) **Zusammenfassung**

Die vorliegende Erfindung betrifft eine Arbeitsmaschine, insbesondere Radlader, mit einer elektrischen Antriebseinheit zum Vortrieb der Arbeitsmaschine sowie mit einer Batterie zur Speisung der Antriebseinheit mit elektrischer Energie, wobei die Antriebseinheit ausgebildet ist, beim nicht benötigen Vortrieb, insbesondere beim Bergabfahren der Arbeitsmaschine in einen Rekuperationsmodus umzuschalten, in dem die Antriebseinheit eine Rekuperationsenergie erzeugt, wobei die Arbeitsmaschine mehrere elektrischen Verbraucher aufweist, wobei den Verbrauchern Leistungsbereiche zugeordnet sind und wobei eine Steuereinrichtung vorgesehen ist, die ausgebildet ist, in dem genannten Rekuperationsmodus der Antriebseinheit dem oder den Verbrauchern in Abhängigkeit der genannten Leitungsbereiche der Verbraucher durch Zuschalten der Verbraucher die gesamte Rekuperationsleistung oder einen Teil der Rekuperationsenergie zuzuweisen.

## Beschreibung

Die vorliegende Erfindung betrifft eine Arbeitsmaschine, insbesondere einen Radlader, mit einer elektrischen Antriebseinheit zum Vortrieb der Arbeitsmaschine sowie mit einer Batterie zur Speisung der Antriebseinheit mit elektrischer Energie, wobei die Antriebseinheit ausgebildet ist, bei nicht benötigtem Vortrieb, insbesondere beim Bergabfahren der Arbeitsmaschine in einen Rekuperationsmodus, in dem die Antriebseinheit eine Rekuperationsenergie erzeugt, umzuschalten.

Bei batterieelektrischen Radladern ergibt sich eventuell der Bedarf, überschüssige Schubenergie beim Bergabfahren derart zu vernichten, dass eine Abfuhr / Umwandlung der Schubenergie in andere Energieformen ohne Nutzung der Betriebsbremse des Radladers erfolgt, beispielsweise zur Erfüllung einer Sicherheitsvorschrift oder um das Überhitzen der betriebsbremse zu vermeiden.

Grundsätzlich besteht die Möglichkeit, die Energie der Batterie der Arbeitsmaschine zuzuführen. Denn beim Bergabfahren hört der (Synchron-) Motor auf, die Räder des Radladers anzutreiben, wodurch die Maschine von selbst verzögert. Der elektrische Motor fungiert dann als Generator und erzeugt aus der Änderung der potentiellen Lageenergie der Arbeitsmaschine (aus der kinetischen Energie der sich bewegenden Räder) Strom, mit dem die Batterie aufgeladen wird. Die Batterie fungiert in diesem Fall als Nutzwiderstand.

Eine Batterie weist eine Bruttokapazität auf, die durch die maximale Energiemenge gebildet wird, die in der Batterie gespeichert werden kann. Die Nettokapazität ist die sinnvoll nutzbare Energiemenge, die beispielsweise bei 90-95 % der Bruttokapazität liegen kann. Ein permanentes Vollladen der Batterie und Ausnutzen der Bruttokapazität ist nachteilig, da sich dadurch die Lebensdauer der Batterie verringert. Unter dem Ladestand wird die tatsächlich gespeicherte Energiemenge bei Beginn der Rekuperation verstanden. Die Ladekapazität ist die Nettokapazität abzüglich des Ladestandes. Unter Ladepuffer wird der Bereich der Bruttokapazität abzüglich der Nettokapazität verstanden. Bei dem Ladepuffer handelt sich somit um den Bereich, der über die Nettokapazität hinausgeht und der üblicherweise nicht ausgenutzt werden sollte, um die Lebensdauer der Batterie so groß wie möglich zu erhalten.

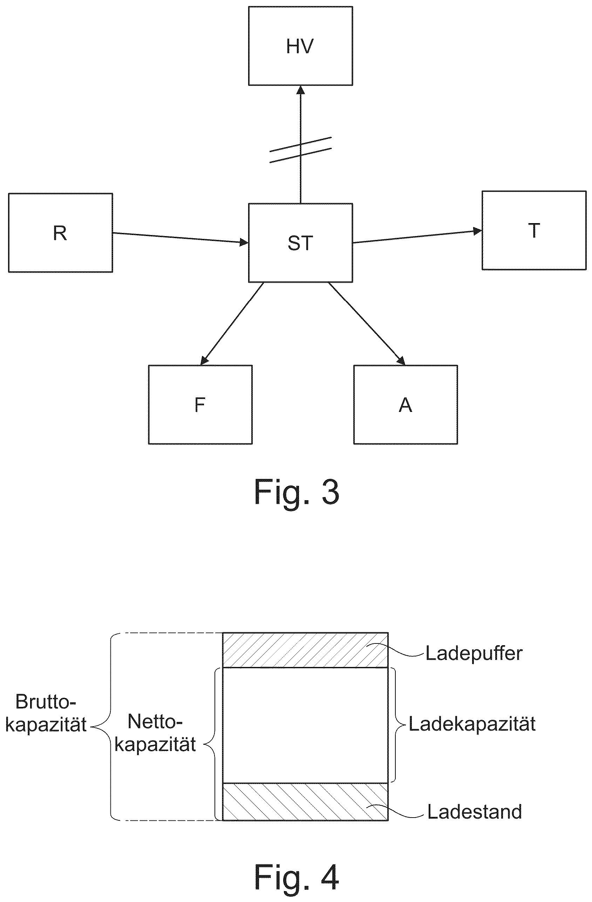

Die genannten Zusammenhänge sind in Figur 4 dargestellt.

Endet die oben genannte Bergabfahrt der Arbeitsmaschine zu einem Zeitpunkt, zu dem die Nettokapazität noch nicht erreicht wird, besteht kein unmittelbarer Handlungsbedarf. Wird die Nettokapazität der Batterie jedoch erreicht, bevor diese Bergabfahrt endet, muss die zur Verfügung stehende Rekuperationsenergie anderweitig verbraucht bzw. vernichtet werden, um ein Vollladen der Batterie bis zur Bruttokapazität zu vermeiden.

Aus dem Stand der Technik ist es bekannt, die einzuspeisende Rekuperationsenergie dann zu verringern bzw. den Rekuperationsbetrieb abzuschalten, wenn die Batterie eine Rekuperation-Grenztemperatur erreicht hat, in Abhängigkeit des Rekuperationsbetriebes ein Herunterschalten des Getriebes zu veranlassen, die Rekuperationsenergie mittels eines elektrischen Widerstandes in Wärme umzuwandeln, oder die gesamte Bremsleistung so zwischen der elektrischen Bremse und einer nicht rekuperativen Bremse zu verteilen, dass eine maximal mögliche elektrische Leistung in der Batterie gespeichert wird.

Die DE 10 2020 207 297 A1 offenbart ein System zur Steuerung der Geschwindigkeit eines Fahrzeuges. Das System beinhaltet eine Energiespeichervorrichtung die ausgebildet ist, die Verzögerungsenergie des Fahrzeuges zu speichern. Ist die Speicherkapazität der Speichervorrichtung erreicht, wird der verbleibende Teil der Verzögerungsenergie an einen nicht energiespeichernden Retarder geleitet.

Aus der DE 10 2010 005 407 A1 ist die Nutzung eines Motorkühler-Lüfters eines Kraftfahrzeuges zur Energie-Rekuperation im Bremsbetrieb oder auch im Schubbetrieb bekannt.

Die DE 694 13 481 T2 offenbart, dass eine überschüssige elektrische Rückgewinnungsleistung, die von der Speicherbatterie nicht absorbiert werden kann, durch Erhöhung des Leistungsverbrauchs durch die Klimaanlage absorbiert wird.

Die JP 2006-333549 A offenbart eine Bremssteuervorrichtung für ein Fahrzeug bei der eine von einem ersten Motor erzeugte regenerative Energie von einem zweiten Motor verbraucht wird, ohne im Wesentlichen ein Drehmoment für den zweiten Motor zu erzeugen.

Der vorliegenden Erfindung liegt die Aufgabe zugrunde, eine Arbeitsmaschine der eingangs genannten Art dahingehend weiterzubilden, dass die Batterielebensdauer auch bei wiederholtem Rekuperationsbetrieb der Arbeitsmaschine möglichst wenig gemindert wird.

Diese Aufgabe wird durch eine Arbeitsmaschine mit den Merkmalen des Anspruchs 1 gelöst.

In einem Aspekt der Erfindung ist vorzugsweise vorgesehen, dass die Arbeitsmaschine mehrere elektrische Verbraucher aufweist, wobei den Verbrauchern Leistungsbereiche zugeordnet sind und dass eine Steuereinrichtung vorgesehen ist, die ausgebildet ist, in dem genannten Rekuperationsmodus der Antriebseinheit dem oder den Verbrauchern in Abhängigkeit der genannten Leistungsbereiche durch Zuschalten der Verbraucher die gesamte Rekuperationsleistung oder einen Teil der Rekuperationsenergie zuzuweisen.

Bei der Antriebseinheit handelt es sich um den Fahrmotor der Arbeitsmaschine. Dieser ist vorzugsweise als Elektromotor und insbesondere als Synchronmotor ausgebildet.

Der vorliegenden Erfindung liegt somit der Gedanke zugrunde, dass die Steuereinrichtung im Rekuperationsmodus die zur Verfügung stehende Rekuperationsenergie oder einen Teil davon auf den oder die Verbraucher verteilt und zwar in Abhängigkeit von den jeweiligen Leistungsbereichen der Verbraucher.

Dabei ist es denkbar, dass die Steuereinrichtung derart ausgebildet ist, dass im Rekuperationsbetrieb die Batterie geladen wird und zwar vorzugsweise nur bis zum Erreichen der Nettokapazität und/oder einen oder mehrere Verbraucher zugeschaltet werden, um die Rekuperationsenergie durch diese in andere Energieformen umzusetzen. Denkbar ist es auch, dass die Steuereinrichtung derart ausgebildet ist, dass im Rekuperationsbetrieb Energie aus der Batterie entnommen wird, wodurch dementsprechend die verbleibende Ladekapazität der Batterie erhöht wird.

In einer Ausführungsform der Erfindung ist vorgesehen, dass die Steuereinrichtung derart ausgebildet ist, dass während des Rekuperationsbetriebes kein Laden der Batterie erfolgt.

Weist beispielsweise ein Verbraucher A einen Leistungsbereich von A1 bis A2 auf und ein Verbraucher B einen Leistungsbereich von B1 bis B2 kann vorgesehen sein, dass die Steuerungseinheit die zur Verfügung stehende Rekuperationsenergie durch Zuschalten des Verbrauchers A diesem zuweist, durch Zuschalten des Verbrauchers B diesem zuweist oder beiden Verbrauchern zuweist. Diese Zuweisung erfolgt in Abhängigkeit der Leistungsbereiche der Verbraucher, die in der Steuerungseinheit vorliegen oder dieser mitgeteilt werden.

Vorzugsweise ist die Steuereinrichtung derart ausgeführt, dass die gesamte Rekuperationsenergie, die beispielsweise bei einer Bergabfahrt oder beim Bremsen anfällt vollständig durch einen oder mehrere Verbraucher bzw. die Batterie verbraucht wird, um bei einer Bergabfahrt ein schneller werden der Arbeitsmaschine zu verhindern.

Wie ausgeführt, ist es in einer Ausführungsform der Erfindung denkbar, dass die Steuereinrichtung ausgebildet ist, im Rekuperationsmodus die Rekuperationsenergie vollständig dem oder den Verbrauchern zuzuweisen, sodass im Rekuperationsmodus eine Aufladung der Batterie unterbleibt. In diesem Fall wird die gesamte Rekuperationsenergie einem oder mehreren Verbrauchern durch deren Zuschalten zugewiesen.

Bei den Verbrauchern kann es sich um solche Verbraucher handeln, die im Normalbetrieb der Arbeitsmaschine andere Funktionen der Arbeitsmaschine erfüllen, und/oder um solche die ausschließlich zum Verbrauch von Rekuperationsenergie vorhanden sind. Zur ersten Gruppe der Verbraucher gehören beispielsweise ohnehin vorhandene Lüfter, Kompressoren, Pumpen, die beispielsweise zum Betrieb einer Arbeitshydraulik, einer Kühlung etc. verwendet werden. Zur zweiten Gruppe der Verbraucher gehören beispielsweise ein zusätzliches Schaltventil, eine zusätzliche Batterie usw. Diese Verbraucher der zweiten Gruppe dienen somit ausschließlich dazu, Rekuperationsenergie aufzunehmen bzw. zu verbrauchen und haben während des Normalbetriebs der Arbeitsmaschine keine Funktion.

Die Steuereinrichtung kann ausgebildet sein, in dem Rekuperationsmodus der Antriebseinheit dem oder den Verbrauchern in Abhängigkeit der zur Verfügung stehenden Rekuperationsenergie durch Zuschalten der Verbraucher die Rekuperationsleistung zuzuweisen. In dieser Ausgestaltung Erfindung erfolgt die Zuweisung der Rekuperationsenergie nicht nur in Abhängigkeit der Leistungsbereiche der Verbraucher, sondern zusätzlich in Abhängigkeit der Höhe der zur Verfügung stehenden Rekuperationsenergie.

Weiterhin kann vorgesehen sein, dass die Steuereinrichtung ausgebildet ist, eine Priorisierung der Verbraucher bei der Zuweisung der Rekuperationsenergie vorzunehmen. Sind beispielsweise Leistungsbereiche der Verbraucher identisch, kann vorgesehen sein, dass die Steuereinrichtung ausgebildet ist Verbraucher A gegenüber Verbraucher B zu priorisieren, d. h. den Verbraucher A zuzuschalten und erst, wenn dessen obere Leistungsgrenze erreicht ist, einen oder mehrere weitere Verbraucher zuzuschalten.

Vorzugsweise ist die Steuereinrichtung ausgebildet, im Rekuperationsmodus den Ladezustand der Batterie nicht oder nicht über einen Grenzwert hinaus zu steigern. Bei dem Grenzwert handelt es sich vorzugsweise um die Nettokapazität der Batterie.

Denkbar ist es, dass die Steuereinrichtung ausgebildet ist, die Rekuperationsenergie erst dann dem oder den Verbrauchern zuzuweisen, wenn der Ladezustand der Batterie einen Grenzwert erreicht hat. In diesem Fall kann vorgesehen sein, die Batterie bis zu einem bestimmten Grenzwert aufzuladen und anschließend einen oder mehrere der Verbraucher zuzuschalten, sofern dann noch Rekuperationsenergie zur Verfügung steht. Bei dem Grenzwert kann sich beispielsweise um die Nettokapazität der Batterie handeln.

In einer Ausgestaltung der Erfindung ist vorgesehen, dass die Arbeitsmaschine einen Kühlkreislauf, insbesondere einen der Batterie zugeordneten Kühlkreislauf sowie einen mit diesem über einen Wärmetauscher gekoppelten Kältemittelkreislauf aufweist, der einen Kompressor und einen Verflüssiger aufweist, und dass es sich bei dem Verbraucher um den Kompressor und/oder um einem dem Verflüssiger zugeordneten Ventilator handelt.

Denkbar ist es beispielsweise, dass die Arbeitsmaschine einen Batteriekühlkreis aufweist, der die Aufgabe hat, die Batterie zu kühlen. Dieser Batteriekühlkreis steht beispielsweise über einen Wärmetauscher mit einem Kältemittelkreislauf in Verbindung, der seinerseits einen Kompressor und einen Verflüssiger aufweist. Es kann ein Ventilator zur Wärmeabfuhr von dem Verflüssiger vorgesehen sein. Bei dem oder den Verbrauchern kann es sich um den Ventilator und/oder um den Kompressor handeln.

Auch ist es denkbar, dass der Kühlkreislauf eine Heizvorrichtung aufweist, wobei vorzugsweise vorgesehen ist, dass der Heizvorrichtung eine Umwälzpumpe zugeordnet ist und dass es sich bei dem Verbraucher um die Heizvorrichtung und/oder um die Umwälzpumpe handelt. Diese Heizvorrichtung kann dazu dienen, den Wärmeverlust auszugleichen, der dadurch entstanden ist, dass Wärme aus dem Kühlkreislauf für die Batterie an den Kältemittelkreislauf übertragen wurde.

Weiterhin kann vorgesehen sein, dass es sich bei dem Verbraucher um die elektrische Antriebseinheit, d.h. um den Fahrmotor der Arbeitsmaschine handelt, wobei vorzugsweise vorgesehen ist, dass Mittel vorhanden sind, mittels derer Schlepp- oder Scherverluste im Luftspalt der Antriebseinheit veränderbar sind. Bei der elektrischen Antriebseinheit handelt es sich um einen Fahrmotor.

Dieser Fahrmotor wird mittels Kühlöl direkt im Kern des Motors "entwärmt" bzw. dort Wärme abgezogen. , Durch eine größere Schräglage oder durch einen deutlich erhöhten Kühlmittelstrom kann sich dieses Öl im Inneren des Motors ansammeln und nicht mehr ausreichend schnell abfließen. Dadurch kommt es zu erhöhten Schlepp- bzw. Scherverlusten im Luftspalt des Motors. Diese bilden somit denkbare Verbraucher im Rahmen der vorliegenden Erfindung.

In einer weiteren Ausgestaltung der Erfindung ist vorgesehen, dass die Arbeitsmaschine eine Arbeitshydraulik mit einer Hydraulikpumpe mit variabel einstellbarem Förderstrom und einen Arbeitshydrauliksteuerblock aufweist und dass es sich bei dem Verbraucher um die Hydraulikpumpe der Arbeitshydraulik handelt.

Der elektrische Verbrauch der Hydraulikpumpe hängt vorzugsweise von der Fördermenge, die beispielsweise über ein elektronisches Signal gesteuert wird, ab.

Vorzugsweise ist vorgesehen, dass der Arbeitshydrauliksteuerblock ein variabel einstellbares, vorzugsweise zu einem Lastdruck proportionales, Druckbegrenzungsventil umfasst. Bei einem Lastdruck von 0 bar weist das Druckbegrenzungsventil bspw. eine Druckbegrenzung von 40 bar auf, wobei für einen merkbar erhöhten Verbrauch der Hydraulikpumpe die Druckbegrenzung ebenfalls erhöht wird.

Vorzugsweise ist vorgesehen, dass dem Arbeitshydrauliksteuerblock ein Schaltventil zur Erzeugung eines Lastdrucks für die Hydraulikpumpe zugeordnet ist. Vorzugsweise kann ein beliebiger Lastdruck von 0 bar bis 330 bar, insbesondere wie bei einer fixen Druckbegrenzung erzeugt werden.

Vorzugsweise ist vorgesehen, dass die Arbeitshydraulik ein Schnellwechselsystem umfasst, wobei über einen Verriegelungszylinder des Schnellwechselsystems ein Lastdruck für die Hydraulikpumpe, insbesondere bis 160 bar, erzeugbar ist.

Vorzugsweise ist vorgesehen, dass ein Erhöhen des Verbrauchs der Hydraulikpumpe durch Erzeugen eines "fiktiven" Lastdrucksignals und damit verbunden Erhöhung des Lastdrucks bzw. des Förderstroms der Hydraulikpumpe erfolgt. Vorzugsweise weist die Hydraulikpumpe einen variabel einstellbaren Förderstrom und/oder eine variable Druckbegrenzung auf.

Alternativ oder zusätzlich zu den vorgenannten ohnehin vorhandenen Verbrauchern ist von der Erfindung auch der Fall umfasst, dass zusätzliche, d. h. nicht ohnehin vorhandene Verbraucher vorhanden sind, die zur Vernichtung von Rekuperationsenergie dienen. Bei diesen zusätzlichen Verbrauchern kann es sich beispielsweise um ein Schaltventil oder auch um einen elektrischen Widerstand oder auch um eine Batterie handeln, die Rekuperationsenergie speichert.

Denkbar ist, dass eine fest montierte Hochvoltbatterie, die als "Backup" für kleine Wegstrecken dient, der oder einer der Verbraucher ist. Die fest montierte Hochvoltbatterie kann bspw., wenn die Arbeitsmaschine ein Batteriewechselsystem aufweist, zum Fahren der Arbeitsmaschine von einer Wechselstation zur nächsten verwendet werden. Die fest montierte Hochvoltbatterie kann bspw. in einem Notbetrieb der Arbeitsmaschine, bspw. wenn die Hauptbatterie aus irgendeinem Grund leer wird und die Arbeitsmaschine stehenbleibt, verwendet werden.

In einem Aspekt der Erfindung ist vorzugsweise vorgesehen, dass Mittel vorhanden sind, die derart ausgebildet sind, dass der Wirkungsgrad der in den Rekuperationsmodus umgeschalteten Antriebseinheit verringerbar ist.

Vorzugsweise ist vorgesehen, dass die Mittel dazu ausgebildet sind, dass Schlepp- und/oder Scherverluste, insbesondere in einem Luftspalt, der Antriebseinheit veränderbar, insbesondere erhöhbar, sind, um den Wirkungsgrad der Antriebseinheit zu verringern.

Vorzugsweise ist vorgesehen, dass die Mittel dazu ausgebildet sind, dass ein durch die Antriebseinheit fließender Volumenstrom von Kühlmittel veränderbar, insbesondere erhöhbar, ist, um den Wirkungsgrad der Antriebseinheit zu verringern.

Vorzugsweise ist vorgesehen, dass die Mittel dazu ausgebildet sind, dass der Drehmomentstromwert der Antriebseinheit, insbesondere ein momentenbildender Anteil des Drehmomentstromwerts, veränderbar, insbesondere verringerbar, ist, um den Wirkungsgrad der Antriebseinheit zu verringern.

Vorzugsweise ist vorgesehen, dass die Mittel eine Steuereinrichtung und/oder eine Kühlmittelpumpe umfassen oder sind.

Ein weiterer Aspekt der Erfindung betrifft ein Verfahren zum Betreiben einer erfindungsgemäßen Arbeitsmaschine, wobei die Antriebseinheit in einem Rekuperationsmodus betrieben wird, wobei der Wirkungsgrad der Antriebseinheit verringert wird.

Vorzugsweise ist vorgesehen, dass der Wirkungsgrad der Antriebseinheit um mehr als 5 %, vorzugsweise um mehr als 30 %, insbesondere um 100 % verringert wird.

Vorzugsweise ist vorgesehen, dass Schlepp- und/oder Scherverluste in einem Luftspalt der Antriebseinheit verändert, insbesondere erhöht, werden, um den Wirkungsgrad der Antriebseinheit zu verringern.

Vorzugsweise ist vorgesehen, dass ein durch die Antriebseinheit fließender Volumenstrom von Kühlflüssigkeit verändert, insbesondere erhöht, wird, um den Wirkungsgrad der Antriebseinheit zu verringern.

Vorzugsweise ist vorgesehen, dass der Drehmomentstromwert der Antriebseinheit, insbesondere ein momentenbildender Anteil des Drehmomentstromwerts, verändert, insbesondere verringert, wird, um den Wirkungsgrad der Antriebseinheit zu verringern.

Vorzugsweise erfolgt eine Vernichtung von kinetischer Schubenergie durch Senkung bzw. Verschlechterung oder Verringerung des Wirkungsgrades der Antriebseinheit, wodurch eine geringere Produktion von Rekuperationsenergie durch die Antriebseinheit erfolgt.

Vorzugsweise ist vorgesehen, dass keine Verteilung der Rekuperationsenergie, insbesondere mittels der Steuereinrichtung durch Steuerung des Zwischenkreises, erfolgt, sondern, dass eine Regulierung der auftretenden Schubenergie durch Beeinflussung des Wirkungsgrads der Antriebseinheit, insbesondere des Synchronmotors erfolgt. Im Gegensatz hierzu erfolgt die Regulierung der Schubenergie gemäß dem Stand der Technik etwa mittels Betriebsbremse oder Gangschalten.

In anderen Worten ist vorzugsweise vorgesehen, dass die kinetische Schubenergie, insbesondere durch die Steuereinrichtung, der Antriebseinheit als thermischem Verbraucher zugewiesen wird.

Vorzugsweise ist vorgesehen, dass ein Teil der kinetischen Schubenergie infolge des verschlechterten Wirkungsgrads der als Generator wirkenden Antriebseinheit direkt in Wärme umgewandelt und abgegeben wird, wobei ein möglicher verbleibender Rest der Schubenergie in elektrische Energie bzw. Rekuperationsenergie umgewandelt wird.

In der Regel liegt der maximal zu erreichende Wirkungsgrad η der Antriebseinheit zwischen 90 % und 95 %. Es können also durch die Antriebseinheit bspw. zwischen 90 % und 95 % der Schubenergie in elektrische Energie bzw. Rekuperationsenergie umgewandelt werden.

Vorzugsweise erfolgt ein Absenken des tatsächlich vorliegenden Wirkungsgrads η um mehr als 5 %, vorzugsweise um mehr als 30 %, insbesondere um bis zu 100 %. Bei einer Absenkung des Wirkungsgrads um 100 % wird also keine elektrische Energie bzw. Rekuperationsenergie durch die Antriebseinheit erzeugt.

Die Absenkung bzw. Verringerung kann vorzugsweise unabhängig von der Art der Kühlung der Antriebseinheit, wobei die Antriebseinheit öl-, luft- und/oder wassergekühlt sein kann, über den Drehmomentstromwert der Antriebseinheit erfolgen.

Insbesondere bei einer Ölkühlung der Antriebseinheit kann ein Erhöhen der Schlepp- und/oder Scherverluste in der Antriebseinheit durch einen erhöhten Volumenstrom von Kühlmittel erfolgen.

Der Volumenstrom des Kühlmittels wird vorzugsweise stufenlos eingestellt.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weiterhin wird darauf hingewiesen, dass die Begriffe "Leistung" und "Energie" im Rahmen der Erfindung synonym verwendet werden und beide sowohl für eine Leistung als auch für eine Energie stehen können.

Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind.

Es zeigen:
- Figur 1:: eine schematische Ansicht des Ladezustandes der Batterie vor und nach der Rekuperation,
- Figur 2:: eine schematische Ansicht der Batterie sowie der anderweitigen Verwendung der Rekuperationsenergie nach Erreichen eines Grenzwertes des Ladezustandes der Batterie,
- Figur 3:: eine schematische Übersicht über die Verteilung der Rekuperationsenergie mittels der Steuereinrichtung,
- Figur 4:: eine schematische Ansicht einer Batterie mit Angabe von Nettokapazität, Bruttokapazität, Ladepuffer, Ladekapazität und Ladestand,
- Figur 5:: eine schematische Übersicht über eine mögliche Verteilung der Rekuperationsenergie,
- Figur 6:: eine schematische Übersicht über eine mögliche Verteilung der Rekuperationsenergie,
- Figur 7:: eine schematische Übersicht über eine mögliche Verteilung der Rekuperationsenergie,

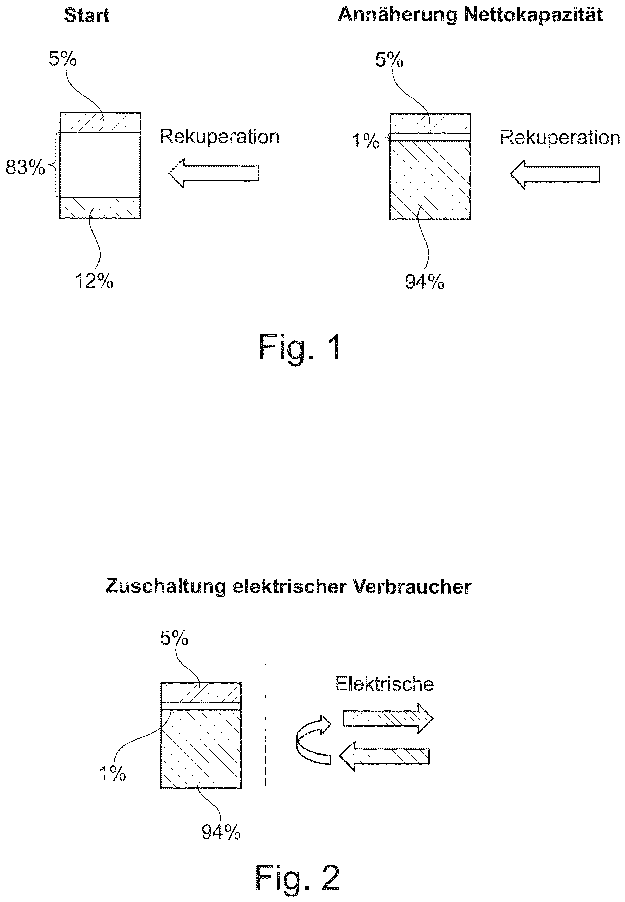

Figur 1 zeigt in einem Ausführungsbeispiel in der linken Darstellung in schematischer Ansicht die Batterie vor Beginn der Rekuperation. In dem hier dargestellten Beispiel beträgt der Ladestand 12 %, der Ladepuffer 5 % und die Ladekapazität somit 83 %.

Wird die Batterie nun im Rekuperationsbetrieb geladen, ergibt sich zum Ende des Ladebetriebes der Batterie der in Figur 1 rechts dargestellte Zustand in diesem Fall beträgt der Ladestand 94 %, der Ladepuffer weiterhin 5 % und die Ladekapazität 1 %. Im Rekuperationsbetrieb wird die Ladekapazität somit vorzugsweise nicht vollständig ausgenutzt, sondern es verbleibt ein "Sicherheitsabstand", sodass sichergestellt ist, dass der Ladepuffer nicht erreicht wird.

Wird im Rekuperationsbetrieb der in Figur 1 rechts dargestellte Zustand erreicht, bevor der Rekuperationsbetrieb beendet ist, werden ein oder mehrere elektrische Verbraucher zugeschaltet, die die elektrische Energie aufnehmen und zum Beispiel in Wärme oder kinetische Energie umsetzen. Dadurch wird verhindert, dass die Batterie über ihre Ladekapazität hinaus geladen wird.

Dieser Zustand ist in Figur 2 gezeigt. Wie durch den gekrümmten Pfeil angedeutet, wird weitere Rekuperationsenergie nicht mehr der Batterie zugeführt, sondern entweder bereits vorhandenen Verbrauchern, zusätzlichen Verbrauchern oder beiden zugeleitet.

Anstelle eines sukzessiven Ladens kann die Batterie auch gleichzeitig geladen werden oder auch entladen werden, während diese weiteren Verbraucher zugeschaltet werden. Dadurch wird ein verlangsamtes Ausschöpfen oder sogar eine laufende Erhöhung der verbleibenden Ladekapazität der Batterie erreicht.

Figur 3 zeigt eine schematische Verteilung von zur Verfügung stehende Rekuperationsenergie.

Mit dem Bezugszeichen R ist die zur Verfügung stehende Rekuperationsleistung gekennzeichnet, die aus der kinetischen Energie entsteht, die zum Beispiel beim Bremsen oder bei einer Bergabfahrt der Arbeitsmaschine in elektrische Energie umgewandelt wird.

Als Verbraucher sind in dem hier gezeigten Beispiel als elektrische Verbraucher das Thermomanagement T, die Arbeitshydraulik A und der Fahrantrieb F bzw. deren Komponenten genannt. Die Steuereinrichtung ist mit S gekennzeichnet. Die Steuereinrichtung ST weist eine Entscheidungseinheit auf, die ausgebildet ist, die zur Verfügung stehende Rekuperationsenergie auf die Verbraucher zu verteilen. Diese Entscheidung bezieht sich darauf, welcher bzw. welche Verbraucher zugeschaltet werden als auch darauf, wieviel der zur Verfügung stehenden Rekuperationsleistung zugewiesen wird.

Die Hochvoltbatterie HV der Arbeitsmaschine wird in dem Ausführungsbeispiel der Figur 3 nicht geladen.

Besonders bevorzugt ist es, wenn die Steuereinrichtung derart ausgebildet ist, dass die der Batterie durch den oder die zugeschalteten elektrischen Verbraucher entzogene Energie größer oder gleich ist als die infolge der Rekuperation zugeführte Energie. Der Ladezustand der Batterie kann sich somit im Rekuperationsmodus nicht verändern oder sogar sinken oder auch steigern. Der Ladepuffer erlaubt auch ein kurzfristiges Überladen über die Nettokapazität hinaus, d.h. kurzzeitig kann die Energiemenge, die der Batterie entzogen wird geringer sein, als die ihr zugeführte Rekuperationsenergie.

Grundsätzlich ist von der Erfindung umfasst, dass die elektrischen Verbraucher schon zu einem früheren Zeitpunkt zugeschaltet werden, d. h. bevor die Batterie ihre Nettokapazität erreicht, allerdings wäre dann der grundsätzlich erwünschte Rekuperationseffekt deutlich geringer.

In dem in Figur 3 dargestellten Ausführungsbeispiel wird die Rekuperationsleistung im DC-Kreisvorzugseise zur Gänze mittels der Verbraucher vernichtet bzw. aufgenommen , um sicherzustellen, dass die Arbeitsmaschine durch die "elektrische Bremse", die durch die elektrischen Verbraucher und ggf. die Batterie gebildet werden, nicht schneller wird.

Im Folgenden wird ein Ausführungsbeispiel der Erfindung näher erläutert:
Elektrische Verbraucher:

### a) ausschließlich auf der Arbeitsmaschine vorhandene Verbraucher

### 1) Thermomanagement: (Kühl- / Heizleistung, Kühlerlüfter)

Der Batteriekühlkreis ist mit einem Kältemittelkreis über einen Plattenwärmetauscher (Chiller) gekoppelt und mit dem Kabinenheizkreis über einen weiteren Plattenwärmetauscher. Der Chiller leitet Kälteleistung in den Batteriekühlkreis ein, in anderen Worten wird dem Kältemittelkreislauf Wärme zugeführt, die aus dem Kältemittelkreislauf wieder abgeführt werden muss.

Für den Betrieb des Kältemittelkreises muss zusätzlich die Wärme, die bedingt durch den Kreisprozess im Kältekreis am Kondensator (Verflüssiger) ansteht, abgeführt werden. Dafür können die Kühlergebläse voll angesteuert werden.

Der Wärmeabfluss aus dem Kühlkreis muss durch einen Hochvoltheizer kompensiert werden. Die verbrauchte elektrische Leistung setzt sich aus der Leistungsaufnahme der Hochvoltheizer und der Leistungsaufnahme von z.B. Umwälzpumpen zusammen.

Betreibt man den Hochvoltheizer mit voller Leistung, lässt sich die verbrauchte elektrische Leistung noch einmal erhöhen, abernimmt in diesem Fall eine Erwärmung des Kühlmediums sowie der Batterien in Kauf, wobeider "Wirkungsgrad" des Wärmepfads Hochvoltheizer - Kühlmedium - Schläuche- Kühlplatte - Zelle keine nur geringe Temperaturerhöhung der Hochvoltbatterie der Arbeitsmaschine zur Folge hat, was zeitlich begrenzt akzeptabel ist.

### 2) Fahrantrieb:

Der Fahrmotor der Arbeitsmaschine wird mittels Kühlöl direkt im Kern des Motors entwärmt.. Durch eine größere Schräglage oder durch deutlich erhöhten Kühlmittelstrom kann sich dieses Öl im Inneren des Motors anstauen und nicht mehr ausreichend schnell nach unten abfließen. Dadurch kommt es zu erhöhten Schlepp- bzw. Scherverlusten im Luftspalt des Motors:

### 3) Hydraulikpumpe/-steuerblock:

In Abhängigkeit des Hydraulikmediumvolumenstrom in der Arbeitshydraulik und des herrschenden Druckes ergibt sich eine Verbrauchsleistung. Es wäre auch denkbar, künstlich einen Lastdruck über ein externes Schaltventil einzuspeisen und somit den Druck zu erhöhen, und somit eine signifikant höhere Verbrauchsleistung zu erzielen.

Es kann bei entsprechender Auslegung die ganze im DC-Kreis vorhandene Rekuperationsleistung über die onbord elektrischen Verbraucher entnommen werden.

Erfindungsgemäß wird die zu verbrauchende Rekuperationsleistung nicht beliebig verteilt, sondern durch die Steuereinrichtung gezielt auf die Verbraucher und zwar in Abhängigkeit von deren Leistungsbereichen.

Bezugnehmend auf das Ausführungsbeispiel kann das Thermomanagement beispielsweise am unteren Limit und die Arbeitshydraulik zur Gänze genutzt werden. Die verbleibenden kW werden über den Fahrantrieb oder eine Mischung von Fahrantrieb und Arbeitshydraulik verbraucht, wobei eine Vollauslastung der Hochvoltheizer zur - zeitlich begrenzten - Entlastung des Motors herangezogen werden kann. In diesem Fall wird die Kapazität des Ladepuffers nicht aktiv benutzt, er behält seine Funktion als "Lebensversicherung" für die Batterie.

### b) Verbraucher die zusätzlich angebracht/mitgeführt werden

Diese Variante ist nicht bevorzugt, trotzdem hilft sie, das Ziel zu erreichen, eine zu starke Ladung der Batterie zu vermeiden und gleichzeitig eine Beschleunigung der Arbeitsmaschine bei der Bergabfahrt zu verhindern.

Als zusätzliche Verbraucher sind denkbar:
- Mitführen einer "normalen" Batterie, die mit Rekuperationsenergie geladen wird
- Mitführen einer Reservehochvoltbatterie
- Anbau eines Widerstands

In einem weiteren Ausführungsbeispiel verbraucht die Antriebseinheit einen Teil der Schubenergie durch Umwandlung in Wärme, sodass im Endeffekt weniger Schubenergie verbleibt, die durch die Antriebseinheit in Rekuperationsenergie umgewandelt werden kann.

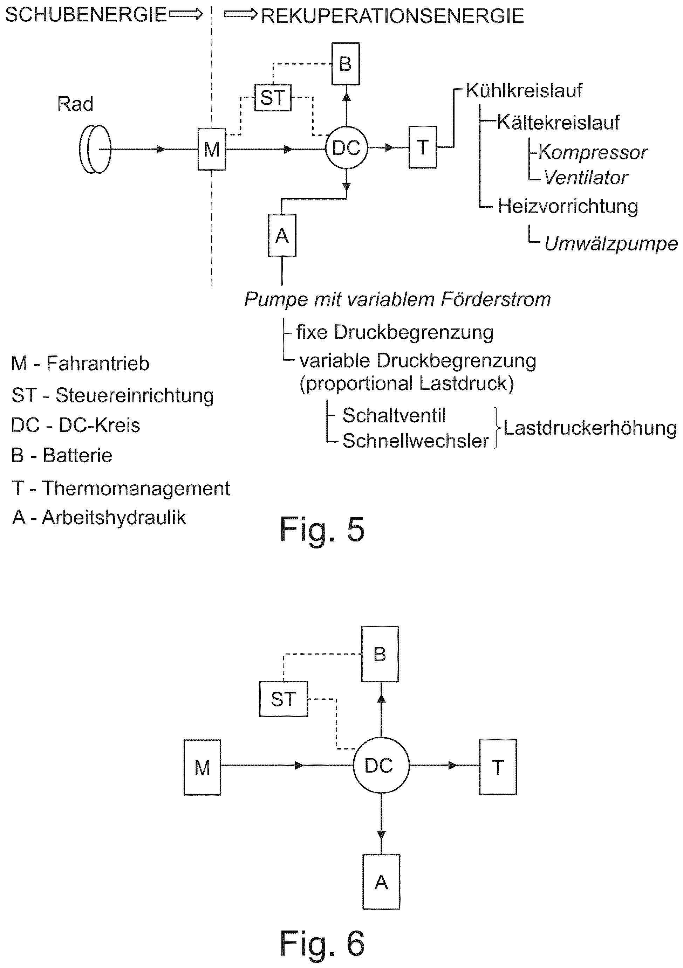

In Figur 5 ist eine Möglichkeit Umwandlung von Schubenergie in Wärme und Rekuperationsenergie bzw. die Vernichtung von Schubenergie und/oder Rekuperationsenergie dargestellt.

Durch eines oder mehrerer Räder der Arbeitsmaschine wird die Antriebseinheit in Form des Fahrantriebs M angetrieben und somit mit Schubenergie beaufschlagt.

Der Fahrantrieb M wandelt einen Teil der Schubenergie in Wärme um, da der Fahrantrieb einen Wirkungsgrad unter 100 % aufweist.

Den Rest der Schubenergie wandelt der Fahrantrieb M in Rekuperationsenergie um, die auf die in Fig. 5 gezeigten Verbraucher verteilt bzw. den in Fig. 5 gezeigten Verbrauchern durch die Steuereinheit ST zugewiesen wird.

Die Rekuperationsenergie wird somit auf die Batterie B, das Thermomanagement T und/oder die Arbeitshydraulik A aufgeteilt, wobei die Verteilung der Rekuperationsenergie über einen Zwischenkreis DC erfolgt.

Dies wird ebenso durch Figur 6 verdeutlicht.

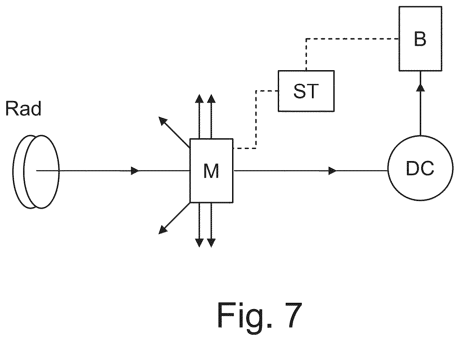

In Figur 7 ist durch die Pfeile um den Fahrantrieb M dargestellt, wie der mit Schubenergie beaufschlagte Fahrantrieb M diese Schubenergie teilweise in Wärme umwandelt.

Ein weiteres Ausführungsbeispiel betrifft eine Verringerung des Wirkungsgrads der Antriebseinheit beim Betreiben der Antriebseinheit in einem Rekuperationsmodus.

Zu den wichtigsten Bestandteilen der Regelung von permanenterregten Synchronmaschinen bzw. Synchronmotoren zählen die d/q-Ströme. Sie entstehen aus der Transformation der drei Strangströme und bilden somit nur einen fiktiven Wert, der nicht direkt gemessen werden kann sondern mittels Koordinaten-Transformationen aus den Strangströmen berechnet wird. Die Ausgangslage stellen die drei Strangströme und der daraus resultierende Gesamtstrom- oder Effektivwertzeiger dar. Die Ströme zueinander sind um 120° phasenverschoben und sinusförmig mit der Drehfrequenz des Rotors. Da dies einen schwer regelbaren Zustand darstellt, werden die folgenden beiden Transformationsschritte vorgenommen.

Als erster Transformationsschritt wird die α/β-Transformation vorgenommen. Mit ihrer Hilfe wird der Effektivwertzeiger in zwei Komponenten *I*_{α} und *I*_{β} zerlegt. Der Effektivwertzeiger wird somit nicht mehr von drei Komponenten bestimmt, sondern nur noch von zwei. Die Zeiger dieser beiden Ströme stehen stets im rechten Winkel aufeinander, ihre Amplituden sind nach wie vor sinusförmig und ändern sich mit der Rotorlage. Das Koordinatensystem, in dem sich die Ströme befinden, besteht aus einer α- und einer β-Achse entlang welcher sich die Amplituden der jeweiligen Ströme ändern.

Die erhaltenen Ströme *I*_{α} und *I*_{β} können im zweiten Schritt mit der d/q-Transformation in zwei neue Ströme in einem rotorfesten Koordinatensystem transformiert werden. Das bedeutet, dass sich das Koordinatensystem nun am Rotor befindet und sich mit dessen Drehzahl mitdreht. Die beiden neu entstandenen Ströme *I*_{d} und *I*_{q} stehen immer im rechten Winkel aufeinander. Allerdings ändert sich die Amplitude der Ströme nicht mehr mit dem Rotorwinkel γ, sondern bleibt konstant. Der q-Anteil wird dabei als momentbildender Anteil bezeichnet, da dieser vor allem für das Bilden des Synchronmoments verantwortlich ist. Der d-Anteil wird als flussbildender Anteil bezeichnet, da dieser vor allem bei der Feldschwächung eine wichtige Rolle spielt. Da der Effektivwertzeiger trotz aller Transformationen unverändert bleiben muss, gilt auch hier, dass die Vektorsumme der d/q-Ströme den Effektivwertzeiger ergibt. Der fixe Winkel zwischen dem Effektivwertzeiger und dem d-Anteil wird als Stromwinkel Ψ bezeichnet und beschreibt die Aufteilung des Statorstroms in die d- und q- Ströme. Da die erhaltenen Ströme konstant sind und nicht mehr von der Position des Rotors abhängen, können sie variiert werden. Diese Variation kann über den Stromwinkel vorgenommen werden. Werden die Werte an den Umrichter übergeben, kann dieser durch die Rücktransformation wieder auf die Strangströme schließen und somit den Synchronmotor steuern.

Bei permanenterregten Synchronmaschinen bzw. Synchronmotoren besteht das erzeugte Moment somit aus zwei Teilen, dem Synchronmoment *M*_{Syn} und dem Reluktanzmoment *M*_{Rel}. Das Synchronmoment wird durch die magnetische Anziehung bzw. Abstoßung der Permanentmagnete am Rotor durch das rotierende Statorfeld erzeugt. Es erreicht sein Maximum bei einem Stromwinkel von 90°, sodass das Stator- und das Rotordrehfeld im rechten Winkel aufeinander stehen. In dieser Position nutzt man die Kombination aus abstoßenden und anziehenden Kräften der Pole optimal aus. Da bei einem Stromwinkel von 90° kein d-Strom, sondern nur ein q-Strom fließt, bezeichnet man den q-Anteil als momentbildenden Anteil.

Das Reluktanzmoment entsteht dadurch, dass der Rotor in die Position des geringsten magnetischen Widerstandes gezogen wird. Dafür muss er aus mindestens zwei unterschiedlich stark magnetisch leitenden Materialien bestehen. Ist das der Fall, wird sich der Rotor immer in die Position bewegen, in der das durch ihn fließende Magnetfeld den geringsten Widerstand erfährt. Dieses Moment kann nur auftreten, wenn sowohl ein d- als auch ein q-Strom vorhanden sind. Normalerweise führt der Weg des geringsten Widerstandes durch das Eisen des Rotors, welches meist so positioniert ist, dass der geringste Widerstand in q-Richtung - also im rechten Winkel zum Nordpol des Rotors - verläuft. Das Vorzeichen spielt dabei keine Rolle, da der Widerstand nicht richtungsabhängig ist. Aus diesem Grund schwingt die Amplitude des Reluktanzmoments mit doppelter Frequenz, wie die des Synchronmoments.

Addiert man nun die Kennlinien der beiden Momente *M*_{Syn} und *M*_{Rel} ergibt sich der Verlauf des Gesamtmoments *M*_{Ges}. Dieses ist von den d/q-Strömen und damit auch vom Stromwinkel abhängig. Aus den d/q-Strömen kann über einen Drehmomentstromwert das Gesamtmoment berechnet werden. Ebenso kann aus dem bei der Rekuperation auf die Antriebseinheit aufgeprägten Gesamtmoment über den Drehmomentstromwert ein durch die Antriebseinheit erzeugter Strom bzw. die erzeugte Rekuperationsenergie berechnet werden.

Das maximale Gesamtmoment liegt somit zwischen 90° < Ψ < 180° und wird mittels der MTPA (Maximum Torque per Ampere) bei der Charakterisierung des Synchronmotors bestimmt. Bei dieser Methode wird der Stromwinkel gesucht, bei der die Summe aus Reluktanz- und Synchronmoment für einen bestimmten Strom maximal ist. Dabei ist der Wirkungsgrad der Maschine im Optimum.

Unterhalb des Feldschwächbereiches wird der Stromwinkel stets in einem optimalen Wirkungsgradbereich des Motors eingestellt. Im Schubbetrieb des Fahrzeuges kann jedoch auch die Situation auftreten, in der die Rekuperationsenergie nicht mehr von der Batterie aufgenommen werden kann und es notwendig ist, diese Rekuperationsenergie zu verringern. Verändert man nun den Stromwinkel im Inverter des Fahrzeuges, wird der Wirkungsgrad des Synchronmotors verringert und dadurch weniger Schubenergie in Rekuperationsenergie umgewandelt. Es entsteht dadurch mehr Wärme im Synchronmotor. Im Extremfall kann der Stromwinkel so gewählt werden, dass kein q-Anteil (momentbildender Anteil) gebildet wird und der Motor rein als Spule dient, welche Wärme abgibt.

## Patentansprüche

1. Arbeitsmaschine, insbesondere Radlader, mit einer elektrischen Antriebseinheit zum Vortrieb der Arbeitsmaschine sowie mit einer Batterie zur Speisung der Antriebseinheit mit elektrischer Energie, wobei die Antriebseinheit ausgebildet ist, beim nicht benötigen Vortrieb, insbesondere beim Bergabfahren der Arbeitsmaschine in einen Rekuperationsmodus umzuschalten, in dem die Antriebseinheit eine Rekuperationsenergie erzeugt, **dadurch gekennzeichnet, dass** die Arbeitsmaschine mehrere elektrische Verbraucher aufweist, wobei den Verbrauchern Leistungsbereiche zugeordnet sind und dass eine Steuereinrichtung vorgesehen ist, die ausgebildet ist, in dem genannten Rekuperationsmodus der Antriebseinheit dem oder den Verbrauchern in Abhängigkeit der genannten Leitungsbereiche der Verbraucher durch Zuschalten der Verbraucher die gesamte Rekuperationsleistung oder einen Teil der Rekuperationsenergie zuzuweisen, wobei die Arbeitsmaschine einen Kühlkreislauf, insbesondere einen der Batterie zugeordneten Kühlkreislauf sowie einen mit diesem über einen Wärmetauscher gekoppelten Kältemittelkreislauf aufweist, der einen Kompressor und einen Verflüssiger aufweist, und dass es sich bei dem Verbraucher um den Kompressor und/oder um einem dem Verflüssiger zugeordneten Ventilator handelt..

2. Arbeitsmaschine nach Anspruch 1, **dadurch gekennzeichnet, dass** die Steuereinrichtung ausgebildet ist, im Rekuperationsmodus die Rekuperationsenergie vollständig dem oder den Verbrauchern zuzuweisen, sodass im Rekuperationsmodus eine Aufladung der Batterie unterbleibt.

3. Arbeitsmaschine nach Anspruch 1 oder 2, **dadurch gekennzeichnet, dass** es sich bei den Verbrauchern um solche Verbraucher handelt, die im Normalbetrieb der Arbeitsmaschine andere Funktionen der Arbeitsmaschine erfüllen, und/oder um solche die ausschließlich zum Verbrauch von Rekuperationsenergie vorhanden sind.

4. Arbeitsmaschine nach einem der vorhergehenden Ansprüche, **dadurch gekennzeichnet, dass** die Steuereinrichtung ausgebildet ist, in dem Rekuperationsmodus der Antriebseinheit dem oder den Verbrauchern in Abhängigkeit der zur Verfügung stehenden Rekuperationsenergie durch Zuschalten der Verbraucher die Rekuperationsleistung zuzuweisen.

5. Arbeitsmaschine nach einem der vorhergehenden Ansprüche, **dadurch gekennzeichnet, dass** die Steuereinrichtung ausgebildet ist, eine Priorisierung der Verbraucher bei der Zuweisung der Rekuperationsenergie vorzunehmen.

6. Arbeitsmaschine nach einem der vorhergehenden Ansprüche, **dadurch gekennzeichnet, dass** die Steuereinrichtung ausgebildet ist, im Rekuperationsmodus den Ladezustand der Batterie nicht oder nicht über einen Grenzwert hinaus zu steigern.

7. Arbeitsmaschine nach einem der vorhergehenden Ansprüche, **dadurch gekennzeichnet, dass** die Steuereinrichtung ausgebildet ist, die Rekuperationsenergie erst dann dem oder den Verbrauchern zuzuweisen, wenn der Ladezustand der Batterie einen Grenzwert erreicht hat.

8. Arbeitsmaschine nach Anspruch 7, **dadurch gekennzeichnet, dass** es sich bei dem Grenzwert um die Nettokapazität der Batterie handelt.

9. Arbeitsmaschine nach einem der vorhergehenden Ansprüche, **dadurch gekennzeichnet, dass** der Kühlkreislauf eine Heizvorrichtung aufweist, wobei vorzugsweise vorgesehen ist, dass der Heizvorrichtung eine Umwälzpumpe zugeordnet ist und dass es sich bei dem Verbraucher um die Heizvorrichtung und/oder um die Umwälzpumpe handelt.

10. Arbeitsmaschine nach einem der vorhergehenden Ansprüche, **dadurch gekennzeichnet, dass** die Arbeitsmaschine eine Arbeitshydraulik mit einer Hydraulikpumpe mit variabel einstellbarem Förderstrom und einen Arbeitshydrauliksteuerblock aufweist und dass es sich bei dem Verbraucher um die Hydraulikpumpe der Arbeitshydraulik handelt.

11. Arbeitsmaschine nach Anspruch 10, **dadurch gekennzeichnet, dass** der Arbeitshydrauliksteuerblock ein variabel einstellbares, vorzugsweise zu einem Lastdruck proportionales Druckbegrenzungsventil umfasst.

12. Arbeitsmaschine nach einem der Ansprüche 10 oder 11, **dadurch gekennzeichnet, dass** dem Arbeitshydrauliksteuerblock ein Schaltventil zur Erzeugung eines Lastdrucks zugeordnet ist.

13. Arbeitsmaschine nach einem der Ansprüche 10 bis 12, **dadurch gekennzeichnet, dass** die Arbeitshydraulik ein Schnellwechselsystem umfasst, wobei über einen Verriegelungszylinder des Schnellwechselsystems ein Lastdruck erzeugbar ist.

14. Arbeitsmaschine nach einem der vorhergehenden Ansprüche, **dadurch gekennzeichnet, dass** es sich bei dem Verbraucher um eine zusätzliche Batterie oder einen zusätzlichen elektrischen Widerstand handelt.
